# EUROPEAN PATENT SPECIFICATION

(11) **EP 2 230 139 B1**
(45) Date of publication and mention of the grant of the patent: **07.05.2014**
(21) Application number: 09155335.4
(22) Date of filing: 17.03.2009
(51) Int. Cl.: B60S 1/38

(54) **Windshield wiper**
Scheibenwischer
Essuie-glace

(43) Date of publication of application: 22.09.2010
(73) Proprietor: Scan Top Enterprise Co. Ltd., Taipei (TW)
(72) Inventor: Yang, Chih-Ming, 220, Banqiao City (TW); Chang, Chuan-Chih, 220, Banqiao City (TW); Chao, Chin-Chen, Taipei, Taiwan R.O.C (TW)
(74) Representative: 2K Patentanwälte Blasberg Kewitz & Reichel

(56) References cited:
- CA-A1- 2 585 208
- FR-A- 2 774 341
- US-A- 5 485 650
- US-A1- 2007 186 366
- US-A1- 2008 295 273

## Description

### BACKGROUND OF THE INVENTION

### 1. Field of the Invention

The present invention relates to a windshield wiper, and in particular, to a windshield wiper used in a car.

### 2. Description of Related Art

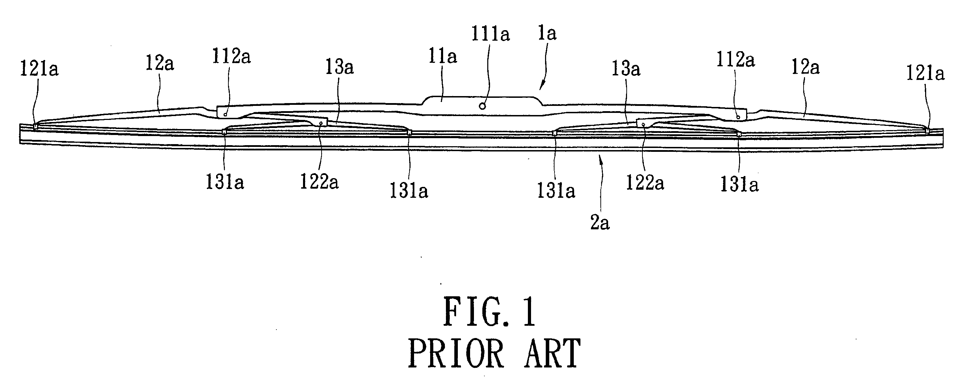

Windshield wiper is mounted in front of the windshield of a car. With a driving arm exerting a force on the windshield wiper, the windshield wiper is attached to the windshield. The driving arm drives the windshield wiper to swing on the windshield repeatedly so as to wipe off rains thereon. Please refer to FIG. 1. Conventional windshield wiper includes a windshield wiper support 1a and a windshield wiper blade 2a. The windshield wiper blade 2a is fastened to the windshield wiper support 1a. The windshield wiper support 11a comprises a primary support 11a, two secondary supports 12a and two fastening supports 13a. The middle of the primary support 11a has a pivot 111a for pivoting to the driving arm (not shown). Both ends of the primary support 11a have a first pivoting portion 112a respectively for pivoting to the secondary support 12a. The outside end of each secondary support 12a is provided with a first fastening piece 121 a for fastening the end of the windshield wiper blade 2a respectively. The inside end of the secondary support 12a has a second pivoting portion 122a for pivoting to the fastening support 13a. Both ends of the fastening support 13a are provided with a second fastening piece 131a respectively for fastening the windshield wiper blade 2a.

However, the conventional windshield wiper has drawbacks as follows:
(I) The windshield wiper blade 2a is fastened to the secondary support 12a and the fastening support 13a via the first fastening piece 121a and the second fastening piece 131a. The flexible deformation of the secondary support 12a and the fastening support 13a is small. When the driving arm (not shown) drives the windshield wiper blade 2a to swing on the windshield repeatedly, a portion of the windshield wiper blade 2a cannot be attached to the windshield completely, which may reduce its effect of wiping rains.
(II) The primary support 11a, the secondary support 12a and the fastening support 13a are pivoted to one another via the first pivoting portion 112a and the second pivoting portion 122a. Thus, these elements may get loosened due to the clearance fit among rigid bodies. When the windshield wiper swings on the windshield repeatedly, noise may be generated easily. Also, the windshield wiper blade 2a may shake easily to reduce its effect of wiping rains.

Further windshield wiper are known from FR 2 774 A1 A and US 2008295273 A1.

Consequently, because of the above limitation resulting from the technical design of prior art, the inventor strives via real world experience and academic research to develop the present invention, which can effectively improve the limitations described above.

### SUMMARY OF THE INVENTION

The objective of the present invention is to provide a windshield wiper which can offer a rapid and easy assembly and disassembly of the warping pieces to the flexible support while proving a firm connection.

This problem is solved by a windshield wiper according to claim 1. Further advantageous embodiments are the subject-matter of the dependent claims.

To achieve the above-mentioned objective, the present invention provides a windshield wiper, which includes: a flexible support having a middle portion and two end portions connected to two ends of the middle portion, one surface of the flexible support being provided with at least two fasteners and a plurality of positioning holes; a connecting piece fixedly connected to one surface of the flexible support; a plurality of warping pieces, each having a positioning portion and at least one elastic portion extended from the positioning portion, the positioning portions abutting the flexible support, each positioning portion formed with a through-hole, the elastic portion having at least one locking piece; a plurality of positioning pieces correspondingly passing through the through-holes and the positioning hole to be fastened to the flexible support; and a windshield wiper blade, the two fasteners being fastened to both ends of the windshield wiper blade, the locking piece being fastened to the windshield wiper blade. According to the invention each of the positioning pieces has a top portion, a base portion and a beam portion, one end of the beam portion is fixed to the top portion, the other end of the beam portion is fixed to the base portion, the top portion and the base portion are separated from each other and arranged in parallel on both ends of the beam portion, the base portion is provided with a flange, the beam portion is provided with a partition, the partition is arranged between the top portion and the base portion and is in parallel with them, the top portion and one surface of the partition abut against the flexible support, the flange and the other surface of the partition abut against the warping piece, the top portion, the base portions, and the beam portion enclose a first positioning groove and a second positioning groove, the height of the first positioning groove corresponds to the thickness of the flexible support, the height of the second positioning groove corresponds to the thickness of the positioning portion, the flexible support is fastened to the first positioning groove, and the warping piece is fastened to the second positioning groove.

The present invention has advantageous features as follows.
(I) Since the middle portion and the end portion of the flexible support have different curvatures, the windshield wiper can be attached more tightly to the windshield, thereby increasing its effect of wiping rains.
(II) Depending on the variation in contact force between the windshield wiper and the windshield, the warping piece generates a corresponding deformation. Thus, when the degree of curvature of the windshield varies, the degree of curvature of the windshield wiper blade varies accordingly. The windshield wiper blade can be attached more tightly to the windshield, thereby increasing its effect of wiping rains.
(III) In addition to correspond to the curvature of the flexible support, the curvature of the windshield wiper blade also corresponds to the deformation of the warping piece. Thus, the warping piece is partially disposed in the flexible support, so that the problem that a portion of the windshield wiper blade is not attached to the windshield is prevented. As a result, its effect of wiping rains can be increased.
(IV) The positioning piece allows the warping piece to be assembled to the flexible support rapidly and easily, so that the time for assembling the windshield wiper is reduced and the detachment process is facilitated. Furthermore, the positioning piece allows the warping piece to be fixed tightly to the flexible support and provides a firm connection for the positioning portion. Thus, the warping piece is prevented from shaking, and the generation of noise is reduced. Also, the windshield wiper blade is prevented from shaking.

In order to further understand the techniques, means and effects of the present invention takes for achieving the prescribed objectives, the following detailed descriptions and appended drawings are hereby referred, such that, through which, the purposes, features and aspects of the present invention can be thoroughly and concretely appreciated; however, the appended drawings are merely provided for reference and illustration, without any intention to be used for limiting the present invention.

### BRIEF DESCRIPTION OF THE DRAWINGS

Fig. 1 is a schematic view of a conventional windshield wiper;
Fig. 2 is a front view of a windshield wiper according to the present invention;
Fig. 2A is a front view of a warping piece and a positioning piece according to the present invention;
Fig. 3 is a partial top view of the windshield wiper according to the present invention;
Fig. 4A is a perspective view of the positioning piece according to the present invention;
Fig. 4B is a perspective view of the positioning piece according to another embodiment of the present invention;
Fig. 4C is a perspective view of the positioning piece according to a further embodiment of the present invention; and
Fig. 5 is a cross-sectional view showing the line L-L in Fig. 2;
Fig. 6A is a front view of the windshield wiper according to another embodiment of the present invention; and
Fig. 6B is a front view of a windshield wiper.

### DETAILED DESCRIPTION OF THE PREFERRED EMBODIMENTS

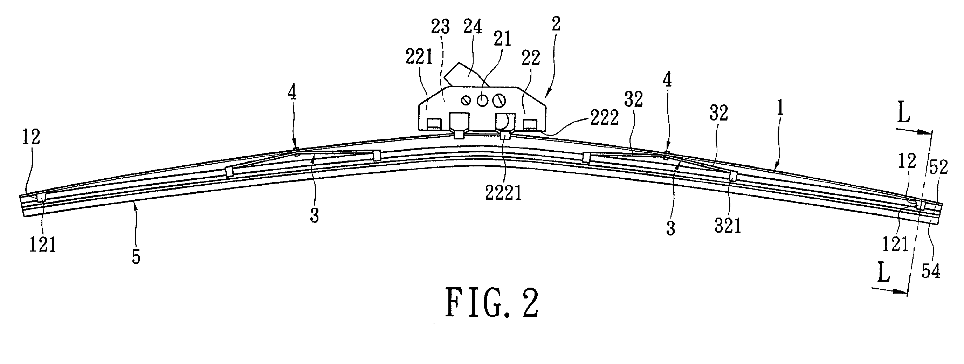

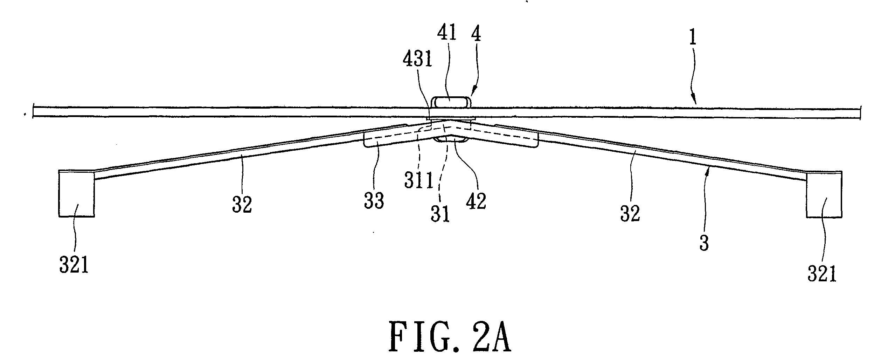

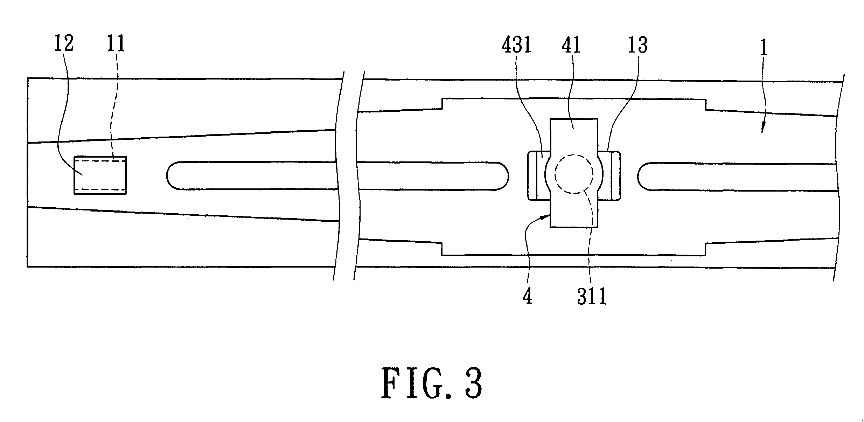

Referring now to Figs. 2, 2A, and 3. The present invention is to provide a windshield wiper. With a driving arm 24 exerting an action force on the windshield wiper, the windshield wiper can be attached to the windshield of a car. The driving arm 24 drives the windshield wiper to swing repeatedly on the windshield. The windshield wiper includes a flexible support 1, a connecting piece 2, two warping pieces 3, two positioning pieces 4, and a windshield wiper blade 5.

The flexible support 1 is shaped as an elongate strip and has a Yang Module of 50∼350GPa. The middle portion and end portion of the flexible support 1 have different curvatures. The top surface of the flexible support 1 is provided with two pairs of fastening holes 11, two fasteners 12 and two positioning holes 13 (Figs. 2 and 3). The two pairs of fastening holes 11 are provided on both end of the top surface of the flexible support 1 and penetrate to the bottom surface of the flexible support 1. The fastener 12 has two first locking pieces 121 that are symmetrical to each other and separated from each other. The two first fastening pieces 121 are inserted into the two pairs of fastening holes 11 and are fastened to the windshield wiper blade 5. The positioning holes 13 are provided in the center of the middle portion and the end portion, which are located on the top surface of the flexible support 1 and penetrate to the bottom surface of the flexible support 1. When the windshield wiper is subjected to an external force, the flexible support 1 bears the action force to generate a flexible deformation, so that the external force is uniformly distributed on the flexible support 1 so as to make the windshield wiper be attached tightly to the windshield. However, since the middle portion and the end portion of the flexible support 1 have different curvatures, the windshield wiper can be attached more tightly on the windshield, thereby increasing its effect of wiping rains. Furthermore, the curvature, length, width, and thickness of the flexible support 1 are dependent on the contact force of the windshield wiper, and thus they can be modified according to practice demands. In the present embodiment, the curvature of the middle portion of the flexible support 1 is smaller than that of the end portion, wherein the flexible support 1 is 500mm in length, 14mm in width, 0.8mm in thickness, but these dimensions are not limited thereto.

The connecting piece 2 is disposed on the top surface of the flexible support 1. The connecting piece 2 has a pivoting portion 21 and a fixing portion 22. The fixing portion 22 has two symmetrical side plates 221 and a bottom plate 222. The side plates 221 are separated from each other and arranged in parallel on the bottom plate 222. The side plates 221 and the bottom plate 222 are arranged vertically to be integrated into one unit. The side plates 221 and the bottom plate 222 enclose to form an accommodating chamber 23. Both side edges of the bottom plate 222 have two fixing pieces 2221 respectively. The fixing piece 2221 is fixedly connected to the flexible support 1 for fixing the connecting piece 2 to the flexible support 1. Both ends of the pivoting portion 21 are fixedly connected to the two side plates 221. The pivoting portion 21 is pivoted to the driving arm 2 that is disposed in the accommodating chamber 23. The driving arm 24 can exert an action force on the connecting piece 2, so that the windshield wiper can be attached to the windshield. The driving arm 24 drives the windshield wiper to swing repeatedly on the windshield, thereby wiping off rains on the windshield.

Each of the warping pieces 3 has a positioning portion 31, two elastic portions 32, and two reinforcing ribs 33. The positioning portion 31 abuts the bottom surface of the flexible support 1. Both ends of the positioning portion 31 extend downwards to form the elastic portion 32. The positioning portion 31 and the elastic portion 32 are shaped as a seesaw respectively (Fig. 2A), so that the elastic portion 32 swings up-and-down by means of using the positioning portion 31 as a fulcrum. The reinforcing ribs 33 are provided on both side edges of the positioning portion 31 and the elastic portion 32, thereby increasing the strength of the warping piece 3. The positioning portion 32 and the elastic portion 32 are integrally formed into one unit. The positioning portion 31 is provided with a through-hole 311. Each of the elastic portions 32 has two second locking pieces 321 that are symmetrical to each other and separated from each other. The second locking pieces 321 are fastened to the windshield wiper blade 5. When the windshield wiper swings on the windshield, the positions on which the windshield wiper is attached to the windshield changes with time, so that the windshield wiper blade 5 can contact the portions of windshield having different degrees of curvature. As a result, the contact force between the windshield wiper blade 5 and the windshield also changes with time. Further, according to various contact forces, the warping piece 3 whose elastic portion 32 swings up-and-down by means of using the positioning portion 31 as a fulcrum generates a corresponding deformation, so that the degree of curvature of the windshield wiper blade 5 fastened to the second locking pieces 321 can be changed with the degree of curvature of the windshield. Thus, the windshield wiper blade 5 can be attached more tightly to the windshield. Furthermore, the warping piece 3 is deformed by an external action force, which in turn changes the degree of curvature of the windshield wiper blade 5. As a result, in addition to correspond to the curvature of the flexible support 1, the curvature of the windshield wiper blade 5 also corresponds to the deformation of the warping piece 3. Thus, the warping piece 3 is partially provided on the flexible support 1, thereby avoiding the problem that portions of the windshield wiper blade 5 cannot be attached to the windshield and increasing its effect of wiping rains. Furthermore, the positions on which the warping piece 3 may be provided on the flexible support 1 and the number of the warping pieces 3 can be varied according to practical demands. In the present embodiment, two warping pieces 3 are provided, and the positions of the warping pieces 3 correspond to those of the positioning holes 13 respectively.

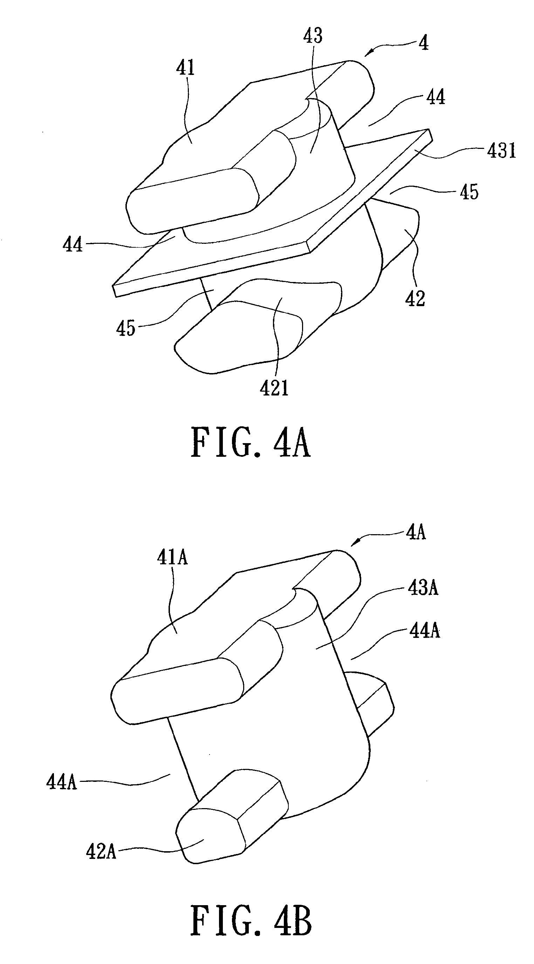

Each of the positioning pieces 4 has a top portion 41, a base portion 42, and a beam portion 43 (Fig. 4A). The top portion 41 is shaped as an elongate strip. The base portion 42 is slightly shaped as an elongate strip. The middle of the base portion 42 is provided with a flange 421. One end of the beam portion 43 is fixedly connected to the top portion 41. The other end of the beam portion 43 is fixedly connected to the base portion 42, so that the top portion 41 and the base portion 42 are separated from each other and arranged in parallel on both ends of the beam portion 43. The middle of the beam portion 43 is provided with a partition 431. The partition 431 is disposed between the top portion 41 and the base portion 42 to be parallel with them. The top portion 41, the base portion 42, and the beam portion 43 are integrally formed into one unit. The top portion 41, the base portion 42, and the beam portion 43 enclose to form a pair of first positioning grooves 44 and a pair of second positioning grooves 45. The height of the first positioning grooves 44 corresponds to the thickness of the corresponding flexible support 1. The height of the second positioning groove 45 corresponds to the thickness of the positioning portion 31. The top portion 41 passes through the through-hole 311 of the positioning portion 31 and the positioning hole 13 of the flexible support 1 (Fig. 3), and it is rotatably fastened to the top surface of the flexible support 1. The bottom surface of the top portion 41 and the top surface of the partition 431 abut the flexible support 1 (Fig. 2A). The flange 421 of the base portion 42 and the bottom surface of the partition 431 abut the warping piece 3, so that the flexible support 1 and the warping piece 3 are fastened to the first positioning groove 44 and the second positioning groove 45 respectively. The warping piece 3 is fixed to the flexible support 1. The positioning piece 4 allows the warping piece 3 to be assembled to the flexible support 1 rapidly and easily, thereby reducing the time for assembling the windshield wiper and facilitating the detachment thereof. The flexible support 1 and the warping piece 3 are fastened to the first positioning groove 44 and the second positioning groove 45 respectively, so that the warping piece 3 can be connected tightly to the flexible support 1 to provide the positioning portion 31 with a firm connection. Thus, the warping piece 3 is prevented from shaking due to an external force and in turn the generation of noise can be prevented. Also, the windshield wiper blade 5 is prevented from shaking.

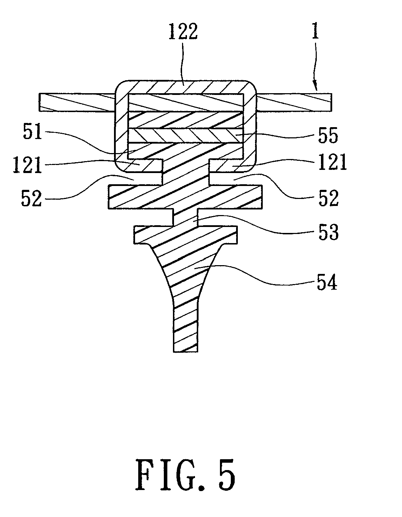

Both ends of the windshield wiper blade 5 are fastened to the fasteners 12 of the flexible support 1, so that the curvature of the windshield wiper blade 5 substantially coincides with that of the flexible support 1. The windshield wiper blade 5 comprises an assembling portion 51, two engaging grooves 52, a connecting portion 53, a wiping piece 54, and a reinforcing piece 55 (Fig. 5). Both side faces of the assembling portion 51 are provided with an engaging groove 52 respectively. The engaging groove 52 corresponds to the first locking piece 121 and the second locking piece 321 (Fig. 2), so that the first locking piece 121 and the second locking piece 321 are fastened in the engaging groove 52. The assembling portion 51 is shaped as an elongate strip of the same width. The bottom surface of the assembling portion 51 is connected to the top surface of the connecting portion 53. The bottom surface of the connecting portion 53 is connected to the top surface of the wiping piece 54. The assembling portion 51, the connecting portion 53, and the wiping piece 54 are integrally formed into one unit. The connecting portion 53 is shaped as an elongate strip of the same width. The width of the connecting portion 53 is smaller than that of the assembling portion 51. The wiping piece 54 is shaped as an elongate strip. The width of the top surface of the wiping piece 54 is larger than that of the connecting portion 53. The width of the wiping piece 54 tapers from its top surface to its bottom surface. Thus, when the bottom surface of the wiping piece 54 is subjected to a lateral force, the wiping piece 54 can swing laterally by means of using the connecting portion 53 as a fulcrum. The interior of the assembling portion 51 is coated with the reinforcing piece 55 for increasing the strength of the windshield wiper blade 5, so that the windshield wiper blade 5 and the flexible support 1 are assembled to form one unit. In general, the windshield wiper blade 5 is made of soft rubber with high toughness. However, in the present invention, any suitable soft material with high toughness may be employed.

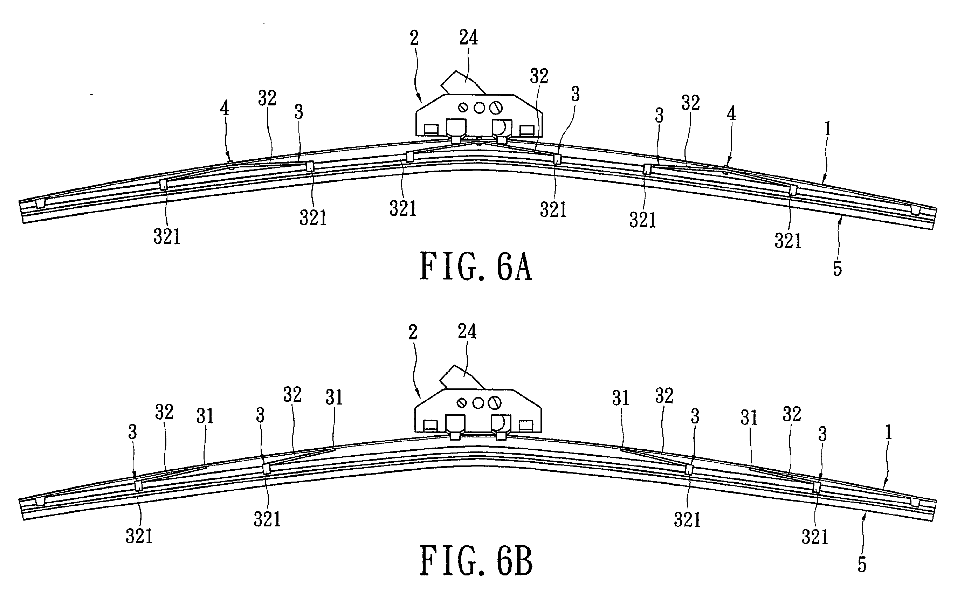

The warping piece 3 can be designed into various forms. The number of the warping pieces 3 can be increased up to three or more (Figs. 6A and 6B), so that the warping pieces 3 can be distributed uniformly on the flexible support 1. Alternatively, the warping piece 3 can have a positioning portion 31 and an elastic portion 32 (Fig. 6B). The positioning portion 31 is fixed directly to the bottom surface of the flexible support 1 by means of welding, screw elements or rivets.

Furthermore, the positioning piece 4A can be designed into various forms. Please refer to Fig. 4B. Each of the positioning pieces 4A has a top portion 41A, a base portion 42A, and a beam portion 43A. The top portion 41A is shaped as an elongate strip. The base portion 42A is shaped as a semi-circular post. One end of the beam portion 43A is fixed to the top portion 41A. The other end of the beam portion 43A is fixed to the base portion 42A, so that the top portion 41A, and the base portion 42A are separated from each other and disposed in parallel on both ends of the beam portion 43A. The top portion 41A, the base portion 42A, and the beam portion 43A are integrally formed into one unit. The bottom surface of the top portion 41A, the top surface of the base portion 42A, and the outer wall of the beam portion 43A enclose to form a pair of positioning grooves 44A. The height of the positioning groove 44A corresponds to the thicknesses of the flexible support 1 and the positioning portion 31. The top portion 41A passes through the through-hole 311 of the positioning portion 31 and the positioning hole 13 of the flexible support 1, and it is rotatably fastened to the top surface of the flexible support 1. The bottom surface of the top portion 41A abuts the top surface of the flexible support 1. The top surface of the base portion 42A abuts the bottom surface of the positioning portion 31 of the warping piece 3, so that the flexible support 1 and the warping piece 3 can be fastened to the positioning groove 44A. The warping piece 3 is fixed to the flexible support 1.

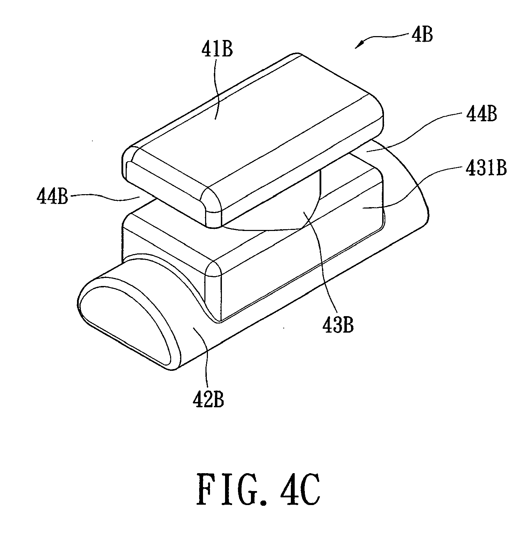

Furthermore, please refer to Fig. 4C. Each of the positioning pieces 4B has a top portion 41B, a base portion 42B, and a beam portion 43B. The top portion 41B is shaped as an elongate strip. The base portion 42B is shaped as a semi-circular post. One end of the beam portion 43B is fixed to the top portion 41B. The other end of the beam portion 43B is fixed to the base portion 42B, so that the top portion 41B and the base portion 42B are separated from each other and disposed in parallel on both ends of the beam portion 43B. The beam portion 43B has a restricting portion 431B. The bottom surface of the top portion 41B, the top surface of the restricting portion 431B, and the outer wall of the beam portion 43B enclose to form a pair of positioning grooves 44B. The height of the positioning groove 44B corresponds to the thicknesses of the flexible support 1 and the positioning portion 31. When the flexible support 1 and the warping piece 3 are fastened to the positioning groove 44B, the restricting portion 431B abuts the warping piece 3, so that the warping piece 3 can be fixed to the flexible support 1 more firmly. Via this arrangement, when the elastic portion 32 swings up-and-down by using the positioning portion 31 as a fulcrum, its stability can be increased.

The present invention has advantageous features as follows.
(I) Since the middle portion and the end portion of the flexible support 1 have different curvatures, the windshield wiper can be attached more tightly to the windshield, thereby increasing its effect of wiping rains.
(II) Depending on the variation in contact force between the windshield wiper and the windshield, the warping piece 3 generates a corresponding deformation. Thus, when the degree of curvature of the windshield varies, the degree of curvature of the windshield wiper blade 5 varies accordingly. The windshield wiper blade 5 can be attached more tightly to the windshield, thereby increasing its effect of wiping rains.
(III) In addition to correspond to the curvature of the flexible support 1, the curvature of the windshield wiper blade 5 also corresponds to the deformation of the warping piece 3. Thus, the warping piece 3 is partially disposed in the flexible support, so that the problem that a portion of the windshield wiper blade 5 is not attached to the windshield can be prevented. As a result, its effect of wiping rains can be increased.
(IV) The positioning piece 4 allows the warping piece 3 to be assembled to the flexible support 1 rapidly and easily, so that the time for assembling the windshield wiper is reduced and the detachment process is facilitated. Furthermore, the positioning piece 4 allows the warping piece 3 to be fixed tightly to the flexible support 1 and provides a firm connection for the positioning portion 31. Thus, the warping piece 3 can be prevented from shaking, and the generation of noise is reduced. Also, the windshield wiper blade 5 can be prevented from shaking.

The above-mentioned descriptions represent merely the preferred embodiment of the present invention, without any intention to limit the scope of the present invention thereto. Various equivalent changes, alternations or modifications based on the claims of present invention are all consequently viewed as being embraced by the scope of the present invention.

## Claims

1. A windshield wiper, comprising:
a flexible support (1) having a middle portion and two end portions, said middle portion and said end portions having different curvatures, a top surface of the flexible support (1) being provided with at least two fasteners (12) and a plurality of positioning holes (13);
a connecting piece (2) fixedly connected to a top surface of the flexible support (1);
a plurality of warping pieces (3), each warping piece (3) having a positioning portion (31) and two elastic portions (32), said positioning portion (31) being extended downwards to opposite sides thereof to form the elastic portions (32), each positioning portion (31) being provided with a through-hole (311), each elastic portion (32) having a locking piece (321), said locking pieces (321) being symmetrical to each other and separated from each other;
a plurality of positioning pieces (4, 4A, 4B) for positioning said warping pieces (3), said positioning pieces (4, 4A, 4B) having a top portion (41, 41A, 41B) passing through the through-holes (311); and
a windshield wiper blade (5), the locking pieces (321) being fastened to the windshield wiper blade (5);
**characterized in that** the two fasteners (12) are fastened to respective ends of the windshield wiper blade (5), wherein said top portions (41) further pass through the positioning holes (13) of the flexible support (1) so that the positioning portions (31) of the warping pieces (3) abut the flexible support (1) and are fastened to the flexible support (1), wherein the top portions (41, 41A, 41B) of the positioning pieces are rotatably fastened to the top surface of the flexible support (1) and the positioning portion (31) of each warping piece (3) fastened to the flexible support serves as a fulcrum for the two elastic portions of each warping piece (3), wherein the positioning portion (31) and the elastic portions (32) are shaped as a seesaw respectively.

2. The windshield wiper according to claim 1, wherein the curvature of the middle portion of the flexible support (1) is smaller than that of its end portions.

3. The windshield wiper according to claim 1 or 2, wherein the connecting piece (2) has a pivoting portion (21) and a fixing portion (22), the fixing portion (22) has two symmetrical side plates (221) and a bottom plate (222), the two side plates (221) are separated from each other and arranged in parallel on the bottom plate (222), two side edges of the bottom plate (222) have two fixing pieces (2221) respectively, and the fixing pieces (2221) are fixed to the flexible support (1).

4. The windshield wiper according to any of the preceding claims, wherein the warping piece (3) further comprises two reinforcing ribs (33) and the reinforcing ribs (33) are provided on both side edges of the positioning portion (31).

5. The windshield wiper according to any of the preceding claims, wherein each positioning piece (4, 4A, 4B) further has a base portion (42, 42A, 42B) and a beam portion (43, 43A, 43B), one end of the beam portion (43, 43A, 43B) is fixed to the top portion (41, 41A, 41B), the other end of the beam portion (43, 43A, 43B) is fixed to the base portion (42, 42A, 42B), and the top portion (41, 41A, 41B) and the base portion (42, 42A, 42B) are separated from each other and arranged in parallel on both ends of the beam portion (43, 43A, 43B).

6. The windshield wiper according to claim 5, wherein the base portion (42) is provided with a flange (421), the beam portion (43) is provided with a partition (431), the partition (431) is arranged between the top portion and the base portion and is in parallel with them, one surface of the partition (431) abuts the flexible support (1), the flange (421) and the other surface of the partition (431) abuts the warping piece (3), the top portion (41), the base portion (42) and the beam portion (43) enclose a first positioning groove (44) and a second positioning groove (45), the height of the first positioning groove (44) corresponds to the thickness of the flexible support (1), the height of the second positioning groove (45) corresponds to the thickness of the positioning portion (31), the flexible support (1) is fastened to the first positioning groove (44) and the warping piece (3) is fastened to the second positioning groove (45).

7. The windshield wiper according to claim 5, wherein the top portion (41A) is shaped as an elongate piece, the base portion (42A) is shaped as a semi-circular post, the top portion (41A) abuts the top surface of the flexible support (1), the base portion (42A) abuts the bottom surface of the positioning portion (31) of the warping piece (3), the top portion (41A), the base portion (42A) and the beam portion (43A) enclose a positioning groove (44A), the height of the positioning groove (44A) corresponds to the thickness of the flexible support (1) and the thickness of the positioning portion (31), the flexible support (1) and the warping piece (3) are fastened to the positioning groove (44A).

8. The windshield wiper according to claim 5, wherein the top portion (41 A) is shaped as an elongate strip, the base portion (42B) is shaped as a semi-circular post, the beam portion (43B) has a restricting portion (431B), the top portion (41 B) abuts the top surface of the flexible support (1), the restricting portion (431B) abuts the warping piece (3), the top portion (4113), the restricting portion (431B) and the beam portion (43B) enclose a positioning groove (44B), the height of the positioning groove (44B) corresponds to the thickness of the flexible support (1) and the thickness of the positioning portion (31), the flexible support (1) and the warping piece (3) are fastened to the positioning groove (44B).

9. The windshield wiper according to any of the preceding claims, wherein the windshield wiper blade (5) comprises an assembling portion (51), two engaging grooves (52), a connecting portion (53), a wiping piece (54), and a reinforcing piece (55), the two engaging grooves (52) are provided on both side surfaces of the assembling portion (51), the two fasteners (12) and the locking pieces (121, 321) are fastened to the engaging grooves (52), the bottom surface of the assembling portion (51) is connected to the top surface of the connecting portion (53), the bottom surface of the connecting portion (53) is connected to the top surface of the wiping piece (54), the width of the connecting portion (53) is smaller than the width of the assembling portion (51), the width of the top surface of the wiping piece (54) is larger than that of the connecting portion (53), the width of the wiping piece (54) tapers from its top surface to its bottom surface, the assembling portion (51) covers the reinforcing piece (55).

## Patentansprüche

1. Scheibenwischer, umfassend:
einen flexibler Träger (1) mit einem Mittelabschnitt und zwei Endabschnitten, wobei der Mittelabschnitt und die Endabschnitte unterschiedliche Krümmungen aufweisen, wobei eine Oberseite des flexiblen Trägers (1) mit wenigstens zwei Befestigungselementen (12) und einer Mehrzahl von Positionierungslöcher (13) versehen ist;
ein Verbindungsstück (2), das mit einer Oberseite des flexiblen Trägers (1) fest verbunden ist;
eine Mehrzahl von Verwölbungsteilen (3), wobei jedes Verwölbungsteil (3) einen Positionierungsabschnitt (31) und zwei elastische Abschnitte (32) aufweist, wobei der Positionierungsabschnitt (31) nach unten zu seinen gegenüberliegenden Seiten verlängert ist, um die elastischen Abschnitte auszubilden (32), wobei jeder Positionierungsabschnitt (31) mit einem Durchgangsloch (311) versehen ist, wobei jeder elastische Abschnitt (32) ein Verriegelungsstück (321) aufweist, wobei die Verriegelungsstücke (321) symmetrisch zueinander und voneinander getrennt sind;
eine Mehrzahl von Positionierungsteilen (4, 4A, 4B) zum Positionieren der Verwölbungsteile (3), wobei die Positionierungsteile (4, 4A, 4B) einen oberen Abschnitt (41, 41A, 41B) aufweisen, der sich durch die Durchgangslöcher (311) erstreckt; und
ein Scheibenwischerblatt (5), wobei die Verriegelungsstücke (321) an dem Scheibenwischerblatt (5) befestigt sind;
**dadurch gekennzeichnet, dass** die beiden Befestigungselemente (12) an jeweiligen Enden des Scheibenwischerblatts (5) befestigt sind, wobei sich die oberen Abschnitte (41) ferner durch die Positionierungslöcher (13) des flexiblen Trägers (1) erstrecken, so dass die Positionierungsabschnitte (31) der Verwölbungsteile (3) an dem flexiblen Träger. (1) anliegen und an dem flexiblen Träger (1) befestigt sind, wobei die obere Abschnitte (41, 41A, 41B) der Positionierungsteile an der Oberseite des flexiblen Trägers (1) drehbeweglich befestigt sind und der Positionierungsabschnitt (31) von jedem Verwölbungsteil (3), der an dem flexiblen Träger befestigt ist, als Drehpunkt für die beiden elastischen Abschnitte von jedem Verwölbungsteil (3) dient, wobei der Positionierungsabschnitt (31) und die elastischen Abschnitte (32) jeweils die Form einer Wippe bzw. eines sich hin und her bewegenden Teils haben.

2. Scheibenwischer gemäß Anspruch 1, wobei die Krümmung des mittleren Abschnitts des flexiblen Trägers (1) kleiner ist als die seiner Endabschnitte.

3. Scheibenwischer nach Anspruch 1 oder 2, wobei das Verbindungsstück (2) einen Schwenkabschnitt (21) und einen Befestigungsabschnitt (22), wobei der Befestigungsabschnitt (22) zwei symmetrische Seitenplatten (221) und eine Bodenplatte (222) aufweist, wobei die beiden Seitenplatten (221) voneinander getrennt und parallel auf der Bodenplatte (222) angeordnet sind, wobei zwei Seitenränder der Bodenplatte (222) jeweils zwei Befestigungsteile (2221) aufweisen und die Befestigungsteile (2221) an dem flexiblen Träger (1) befestigt sind.

4. Scheibenwischer nach einem der vorhergehenden Ansprüche, wobei die Verwölbungsteile (3) weiterhin zwei Verstärkungsrippen (33) aufweisen und wobei die Verstärkungsrippen (33) an den beiden Seitenränder des Positionierungsabschnitts (31) vorgesehen sind.

5. Scheibenwischer nach einem der vorhergehenden Ansprüche, wobei jedes Positionierungsteil (4, 4A, 4B) ferner einen Basisabschnitt (42, 42A, 42B) und einen Trägerabschnitt (43, 43A, 43B) aufweist, wobei ein Ende des Trägerabschnitts (43, 43A, 43B) an dem oberen Abschnitt (41, 41A, 41B) befestigt ist, wobei das andere Ende des Trägerabschnitts (43, 43A, 43B) an dem Basisabschnitt (42, 42A, 42B) befestigt ist und wobei der obere Abschnitt (41, 41A, 41B) und der Basisabschnitt (42, 42A, 42B) voneinander getrennt sind und parallel an den beiden Enden des Trägerabschnitts (43, 43A, 43B) angeordnet sind.

6. Scheibenwischer gemäß Anspruch 5, wobei der Basisabschnitt (42) mit einem Flansch (421) versehen ist, wobei der Trägerabschnitt (43) mit einer Trennwand (431) versehen ist, wobei die Trennwand (431) zwischen dem oberen Abschnitt und dem Basisabschnitt angeordnet ist und parallel zu diesem ist, wobei eine Oberfläche der Trennwand (431) an dem flexiblen Träger (1) anliegt, wobei der Flansch (421) und die andere Oberfläche der Trennwand (431) an dem Verwölbungsstück (3) anliegen, wobei der obere Abschnitt (41), der Basisabschnitt (42) und der Trägerabschnitt (43) eine erste Positionierungsrille (44) und eine zweite Positionierungsrille (45) umschließen, wobei die Höhe der ersten Positionierungsrille (44) der Dicke des flexiblen Trägers (1) entspricht, wobei die Höhe der zweiten Positionierungsrille (45) der Dicke des Positionierungsabschnitts (31) entspricht, wobei der flexible Träger (1) an der ersten Positionierungsrille (44) befestigt ist und wobei das Verwölbungsstück (3) an der zweiten Positionierungsrille (45) befestigt ist.

7. Scheibenwischer gemäß Anspruch 5, wobei der obere Abschnitt (41 A) als ein langgestrecktes Stück geformt ist, wobei der Basisabschnitt (42A) als halbkreisförmige Säule geformt ist, wobei der obere Abschnitt (41A) an der Oberseite des flexiblen Trägers (1) anliegt, wobei der Basisabschnitt (42A) an der Bodenfläche des Positionierungsabschnitts (31) des Verwölbungssstücks (3) anliegt, wobei der obere Abschnitt (41A), der Basisabschnitt (42A) und der Trägerabschnitt (43A) eine Positionierungsrille (44A) umschließen, wobei die Höhe der Positionierungsrille (44A) der Dicke des flexiblen Trägers (1) und der Dicke des Positionierungsabschnitts (31) entspricht, wobei der flexible Träger (1) und das Verwölbungssstück (3) an der Positionierungsrille (44A) befestigt sind.

8. Scheibenwischer nach Anspruch 5, wobei der obere Abschnitt (41 A) als ein länglicher Streifen geformt ist, wobei der Basisabschnitt (42B) als eine halbkreisförmige Säule geformt ist, wobei der Trägerabschnitt (43B) einen Begrenzungsabschnitt (431B) aufweist, wobei der obere Abschnitt (41B) an der Oberseite des flexiblen Trägers (1) anliegt, wobei der Begrenzungsabschnitt (431B) an dem Verwölbungsstück (3) anliegt, wobei der obere Abschnitt (4113), der Begrenzungsabschnitt (431B) und der Trägerabschnitt (43B) eine Positionierungsrille (44B) umschließen, wobei die Höhe der Positionierungsrille (44B) der Dicke des flexiblen Trägers (1) und der Dicke des Positionierungsabschnitts (31) entspricht, wobei der flexible Träger (1) und das Verwölbungssstück (3) an der Positionierungsrille (44B) befestigt sind.

9. Scheibenwischer nach einem der vorhergehenden Ansprüche, wobei das Scheibenwischerblatt (5) einen Montageabschnitt (51), zwei Eingriffsvertiefungen (52), einen Verbindungsabschnitt (53), ein Wischteil (54) und ein Verstärkungsteil (55) aufweist, wobei die beiden Eingriffsvertiefungen (52) auf den beiden Seitenflächen des Montageabschnitts (51) vorgesehen sind, wobei die beiden Befestigungselemente (12) und die Verriegelungsstücke (121, 321) an den Eingriffsvertiefungen (52) befestigt sind, wobei die Bodenfläche des Montageabschnitts (51) mit der Oberseite des Verbindungsabschnitts (53) verbunden ist, wobei die Bodenfläche des Verbindungsabschnitts (53) mit der Oberseite des Wischteils (54) verbunden ist, wobei die Breite des Verbindungsabschnitts (53) kleiner als die Breite des Montageabschnitts (51) ist, wobei die Breite der Oberseite des Wischteils (54) größer als die des Verbindungsabschnitts (53) ist, wobei die Breite das Wischteils (54) von seiner Oberseite zu seiner Unterseite hin abnimmt, wobei der Montageabschnitt (51) das Verstärkungsteil (55) abdeckt.

## Revendications

1. Un essuie-glace, comprenant :
un support flexible (1) ayant une partie médiane et deux parties d'extrémité, ladite partie médiane et lesdites parties d'extrémité présentant différentes courbures, une surface inférieure du support flexible (1) comprenant au moins deux éléments de fixation (12) et une pluralité de trous de positionnement (13) ;
une pièce de liaison (2) fixée de manière rigide à une surface supérieure du support flexible (1) ;
une pluralité de pièces de déformation (3), chaque pièce de déformation (3) ayant une partie de positionnement (31) et deux parties élastiques (32), ladite partie de positionnement (31) s'étendant vers le bas vers deux côtés opposées pour former les parties élastiques (32), chacune des parties de positionnement (31) étant fournie avec un trou traversant (311), chacune des parties élastiques (32) ayant une pièce de verrouillage (321), lesdites pièces de verrouillage (321) étant symétriques et distantes l'une par rapport aux autres ;
une pluralité de pièces de positionnement (4, 4A, 4B) pour le positionnement desdites pièces de déformation (3), lesdites pièces de positionnement (4, 4A, 4B) ayant une partie supérieure (41, 41A, 41B) passant au travers des trous traversant (311) ; et
un bras d'essuie-glace (5), les pièces de verrouillage (321) étant fixées au bras d'essuie-glace (5) ;
**caractérisé en ce que** les deux éléments de fixation (12) sont fixés aux extrémités respectives du bras d'essuie-glace (5), dans lequel ladite partie médiane et lesdites parties d'extrémité dudit support flexible (1) présente différentes courbures, dans lequel lesdites parties supérieures (41) passent en outre au travers des trous de positionnement (13) du support flexible (1) de telle façon que les parties de positionnement (31) des pièces de déformation (3) aboutent le support flexible (1) et sont fixées sur le support flexible (1), dans lequel les parties supérieures (41, 41A, 41 B) des pièces de positionnement sont fixées en rotation à la partie supérieure du support flexible (1) et la partie de positionnement (31) de chacune des pièces de déformation (3) fixée sur le support flexible sert de point d'appui pour les deux parties élastiques de chaque pièce de déformation (3), dans lequel la partie de positionnement (31) et les parties élastiques (32) sont respectivement en forme de bascule.

2. L'essuie-glace selon la revendication 1, dans lequel la courbure de la partie médiane du support flexible (1) est moindre que celle de ses parties d'extrémité.

3. L'essuie-glace selon la revendication 1 ou 2, dans lequel la pièce de liaison (2) présente une partie pivotante (21) et une partie fixe (22), la partie pivotante (22) ayant deux plaques latérales symétriques (221) et une plaque inférieure (222), les deux plaques latérales (221) étant séparées l'une de l'autre et disposées en parallèle sur la plaque inférieure (222), deux côtés latéraux de la plaque inférieure (222) ayant respectivement deux pièces de fixation (2221), et les pièces de fixation (221) étant fixées sur le support flexible (1).

4. L'essuie-glace selon l'une quelconque des revendications précédentes, dans lequel la pièce de déformation (3) comprend en outre deux nervures de renfort (33) et les nervures de renfort (33) sont disposées des deux bords latéraux de la partie de positionnement (31).

5. L'essuie-glace selon l'une quelconque des revendications précédentes, dans lequel chacune des pièces de positionnement (4, 4A, 4B) comporte en outre une base (42, 42A, 42B) et une partie profilée (43, 43A, 43B), une extrémité de la partie profilée (43, 43A, 43B) étant fixée à la partie supérieure (41, 41A, 41B), l'autre extrémité de la partie profilée (43, 43A, 43B) étant fixée à la base (42, 42A, 42B), et la partie supérieure (41, 41A, 41B) et la base (42, 42A, 42B) étant séparée l'une de l'autre et disposées parallèlement sur les deux extrémités de la partie profilée (43, 43A, 43B).

6. L'essuie-glace selon la revendication 5, dans lequel la base (42) est disposée avec un rebord (421), la partie profilée (43) étant disposée avec une cloison (431), la cloison (431) étant disposée entre la partie supérieure et la base et étant parallèles à ces dernières, une surface de la cloison (431) venant abouter le support flexible (1), le rebord (421) et l'autre surface de la cloison (431) venant abouter la pièce de déformation (3), la partie supérieure (41), la base (42) et la partie profilée (43) comprenant une première rainure de positionnement (44) et une seconde rainure de positionnement (45), la hauteur de la première rainure de positionnement (44) correspondant à l'épaisseur du support flexible (1), la hauteur de la seconde rainure de positionnement (45) correspondant à l'épaisseur de la partie de positionnement (31), le support flexible (1) étant fixé à la première rainure de positionnement (44) et la pièce de déformation (3) étant fixée à la seconde rainure de positionnement (45).

7. L'essuie-glace selon la revendication 5, dans lequel la partie supérieure (41A) présente la forme d'une pièce allongée, la base (42A) présente la forme d'une poutre semi-circulaire, la partie supérieure (41A) venant abouter la surface supérieure du support flexible (1), la base (42A) venant abouter la surface inférieure de la partie de positionnement (31) de la pièce de déformation (3), la partie supérieure (41A), la base (42A) et la partie profilée (43A) comprenant une rainure de positionnement (44A), la hauteur de la rainure de positionnement (44A) correspondant à l'épaisseur du support flexible (1) et l'épaisseur de la partie de positionnement (31), la support flexible (1) et la pièce de déformation (3) étant fixées à la rainure de positionnement (44A).

8. L'essuie-glace selon la revendication 5, dans lequel la partie supérieure (41A) présente la forme d'une bande allongée, la base (42A) présente la forme d'une poutre semi-circulaire, la partie profilée (43B) présente une portion restreinte (431 B), la partie supérieure (418) venant abouter la surface supérieure du support flexible (1), la partie restreinte (431B) venant abouter la pièce de déformation (3), la partie supérieure (4113), la partie restreinte (431B) et la partie profilée (43B) comprenant une rainure de positionnement (44B), la hauteur de la rainure de positionnement (44B) correspondant à l'épaisseur du support flexible (1) et l'épaisseur de la partie de positionnement (31), le support flexible (1) et la pièce de déformation (3) étant fixée à la rainure de positionnement (44B).

9. L'essuie-glace selon l'une quelconque des revendications précédentes, dans lequel le bras d'essuie-glace (5) comporte une partie d'assemblage (51), deux rainures d'engagement (52), une partie de liaison (53), une pièce d'essuyage (54), et une pièce de renfort (55), les deux rainures d'engagement (52) étant disposée sur les deux surfaces latérales de la partie d'assemblage (51), les deux éléments de fixation (12) et les pièces de verrouillage (121, 321) étant fixées sur les rainures d'engagement (52), la surface inférieure de la partie d'assemblage (51) étant fixée sur la surface supérieure de la partie de liaison (53), la surface inférieure de la partie de liaison (53) étant fixée sur la surface supérieure de la pièce d'essuyage (54), la largeur de la partie de liaison (53) étant inférieure à la largeur de la partie d'assemblage (51), la largeur de la partie supérieure de la pièce d'essuyage (54) étant plus importante que celle de la partie de liaison (53), la largeur de la pièce d'essuyage (54) diminuant progressivement depuis sa surface supérieure jusqu'à sa surface inférieure, la partie d'assemblage (51) recouvrant la pièce de renfort (55).
